# EUROPEAN PATENT SPECIFICATION

(11) **EP 3 564 820 B1**
(45) Date of publication and mention of the grant of the patent: **06.01.2021**
(21) Application number: 17897024.0
(22) Date of filing: 16.02.2017
(51) Int. Cl.: G06F 11/36

(54) **OPERATION VERIFICATION APPARATUS, OPERATION VERIFICATION METHOD, AND OPERATION VERIFICATION PROGRAM**
BETRIEBSVERIFIZIERUNGSVORRICHTUNG, BETRIEBSVERIFIZIERUNGSVERFAHREN UND BETRIEBSVERIFIZIERUNGSPROGRAMM
APPAREIL DE VÉRIFICATION D'OPÉRATION, PROCÉDÉ DE VÉRIFICATION D'OPÉRATION ET PROGRAMME DE VÉRIFICATION D'OPÉRATION

(43) Date of publication of application: 06.11.2019
(73) Proprietor: Mitsubishi Electric Corporation, Chiyoda-ku Tokyo 100-8310 (JP)
(72) Inventor: ISODA, Makoto, Tokyo 100-8310 (JP)
(74) Representative: Pfenning, Meinig & Partner mbB
(86) International application number: PCT/JP2017/005633
(87) International publication number: WO 2018/150504

(56) References cited:
- WO-A1-2013/072977
- JP-A- H11 282 722
- JP-A- 2007 011 690
- JP-A- 2007 249 884
- US-A1- 2007 220 493
- US-B1- 6 698 012

## Description

### Technical Field

The present invention relates to an operation verification apparatus, an operation verification method, and an operation verification program.

### Background Art

Control software that is installed in a control apparatus has rapidly increased in size and complexity, due to computerization of a control function for accommodating multi-functionality and improvement in added value. A rapid increase in variation of the control software due to a derivative model or a difference in a destination of the control apparatus is further expected in the future. In order to maintain and strengthen profitability under such circumstances, it is necessary to tackle improvement in productivity of control software development. As a specific measure, there is a transition to differential and derivative development using introduction of an execution environment of the software. The execution environment is an environment such as a communication process, a timer process, a scheduler, an OS (Operating System), or middleware for execution of the software. Further, as a specific measure, there may be considered application of a software development method and a software development tool for implementing quality assurance and improvement of work efficiency of the software when the differential and derivative development is operated.

Generally, conventional control software has had a typical configuration of a single-task configuration in which an execution priority is provided for each control function, and periodical execution is performed according to this priority. Introduction of the execution environment of the software allows nonperiodic execution to be triggered by an event to coexist with the conventional periodic execution, thereby making the configuration of the control software close to a multi-task configuration.

An impact analysis (Impact Analysis) before and after a change of the software and sufficient testing according to the impact range are demanded for the transition to or the operation of the differential and derivative development. As a specific example of this impact analysis and the testing, there are an impact analysis and testing that are demanded by DO-178B in the field of aviation or ISO26262 in the field of automobiles, which is a functional safety standard for each industrial field.

Then, requirements related to the introduction of the execution environment of the software or the application of the software development method and tool are clarified as follows:
(1) identification of an equivalent portion whose operation content has not logically been changed or a different portion whose operation content has been changed between two pieces of software such as software versions that are daily developed before and after transition to a new execution environment or after the transition to the execution environment; and
(2) detection of whether a functional defect or a defect related to concurrency has newly occurred between the two pieces of software, using a method suited to each of the equivalent portion and the different portion. Further, removal of the defect if the defect has occurred.

Non-Patent Literature 1 discloses, as a conventional verification and testing technology, an equivalence check to determine whether operation content has been logically changed between two pieces of software of the single task configuration. Such a software property as that the operation content has not been logically changed between the two pieces of software will be hereinafter referred to as equivalence.

Each of Patent Literature 1 and Non-Patent Literature 2 discloses a test case generation technology for automatically generating an input value for detecting a functional defect. Each of Patent Literature 2 and Patent Literature 3 discloses a concurrent processing monitoring unit to detect a defect related to concurrency, in which a value that is set for a shared variable is different at a time of an update of the shared variable in a state where exclusive control is not performed and before and after a software change.

US 2007/220493 A1 discloses a software verification program allowing a computer to execute verification of software including a library and a program that uses a library to operate in a concurrent or parallel manner, comprises: a shared element utilizing part extraction step that extracts a part at which a shared element, which is an element that is defined in the library and which can be used by the program, is used in the program; and a condition verification step that verifies based on a thread-safe condition defined in the library for the each shared element whether a shared element in the shared element utilizing part extracted by the shared element utilizing part extraction step satisfies the thread-safe condition.

US 6698012 B1 discloses a systematic testing method of procedures. The testing is carried out for parallel procedures separately from consecutive procedures which have no parallelism. Behavior of a group of parallel procedures to be tested in a parallel mode is specified. Based on the behavior, the group of procedures is tested using models of correct parallel behavior.

### Citation List

### Patent Literature

Patent Literature 1: JP 2008-276556 A
Patent Literature 2: JP 2014-038467 A
Patent Literature 3: WO2013-072977A

### Non-Patent Literature

Non-Patent Literature 1: Rupak Majumdar, "Compositional Equivalence Checking for Models and Code of Control Systems, "52nd IEEE Conference on Decision and Control, December 2013.
Non-Patent Literature 2: Yuusuke Hashimoto and Shin Nakajima, "A Tool Chain to Combine Software Model Checking and Test Case Generation", Software Engineering Symposium 2011, 2011.

### Summary of Invention

### Technical Problem

Conventionally, there has been a problem that when a program of the multi-task configuration has been changed, equivalence between two pieces of programs before and after the change cannot be determined, so that an enormous amount of work is required for estimating the cause of a defect.

An object of the present invention is to automatically estimate the cause of a defect of a program of a multi-task configuration even after the program has been changed, by dividing the content of each control processing including a concurrent processing until the content of the control processing may be treated as a plurality of sequential processings.

### Solution to Problem

An operation verification apparatus according to the present invention may include:
a division unit to read each of a first program including a plurality of control processings and a second program including a plurality of control processings where at least a portion of the plurality of control processings of the first program has been changed, to divide each of the plurality of control processings into a concurrency processing to implement a concurrent processing in the plurality of control processings and a functional sequential processing to implement a function to be achieved by the plurality of control processings, to output the first program with each of the plurality of control processings therein divided into the concurrency processing and the functional sequential processing as a first divided program, and to output the second program with each of the plurality of control processings therein divided into the concurrency processing and the functional sequential processing as a second divided program; wherein the plurality of control processings (63) are processings including operation sets, branchings, mergings, and loopings; and
a cause estimation unit to estimate the functional sequential processing that is different between the first divided program and the second divided program as a cause of a functional defect when the defect of the function is detected in the second divided program as the functional defect and to estimate the concurrency processing that is different between the first divided program and the second divided program as a cause of a concurrency defect when the defect that is caused by the concurrent processing is detected in the second divided program as the concurrency defect.

### Advantageous Effects of Invention

In the operation verification apparatus according to the present invention, the division unit divides, for each of the first program before the change and the second program after the change, each of the plurality of control processings therein into the concurrency processing to implement the concurrent processing and the functional sequential processing to implement the function. Then, the division unit outputs, as the first divided program, the first program in which each of the plurality of control processing has been divided into the concurrency processing and the functional sequential processing. Further, the division unit outputs, as the second divided program, the second program in which each of the plurality of control processings has been divided into the concurrency processing and the functional sequential processing. The cause estimation unit estimates the functional sequential processing that is different between the first divided program and the second divided program as the cause of the functional defect when the functional defect is detected in the second divided program. The cause estimation unit estimates the concurrency processing that is different between the first divided program and the second divided program as the cause of the concurrency defect when the defect in the second divided program is detected as the concurrency defect. Consequently, according to the operation verification apparatus of the present invention, even if a program of a multi-task configuration has been changed, the cause of a defect in a program after the change can be automatically estimated.
The invention is defined by the subject-matter of the appended independent claims 1,7,8.

### Brief Description of Drawings

Fig. 1 is a diagram illustrating a software architecture depicting an overall configuration of control software.
Fig. 2 is a configuration diagram of an operation verification apparatus 100 according to a first embodiment.
Fig. 3 is a flow diagram illustrating an operation verification process S100 in each of an operation verification method 610 and an operation verification program 620 according to this embodiment.
Fig. 4 illustrates an example of a concurrent processing correspondence table 163 according to the first embodiment.
Fig. 5 illustrates an example of each of a before-change implementation 161 and an after-change implementation 162 according to the first embodiment.
Fig. 6 is a flow diagram illustrating a division process S110 according to the first embodiment.
Fig. 7 illustrates an example of each of a before-change divided implementation 111 and an after-change divided implementation 112 according to the first embodiment.
Fig. 8 is a flow diagram illustrating an equivalence checking process S120 according to the first embodiment.
Fig. 9 illustrates an example of an equivalence checking result 121 according to the first embodiment.
Fig. 10 is a flow diagram illustrating a defect detection process S30 according to the first embodiment.
Fig. 11 illustrates an example of each of a functional defect 131 and a concurrency defect 141 according to the first embodiment.
Fig. 12 is a flow diagram illustrating a cause estimation process S150 according to the first embodiment.
Fig. 13 illustrates an example of each of a functional defect cause 151 and a concurrency defect cause 152 according to the first embodiment.
Fig. 14 is a configuration diagram of an operation verification apparatus 100 according to a variation example of the first embodiment.
Fig. 15 illustrates an example of a concurrent processing correspondence table 163a according to a second embodiment.
Fig. 16 illustrates an example of a concurrent processing correspondence table 163b according to the second embodiment.
Fig. 17 illustrates an example of an equivalence checking result 121a according to a third embodiment.
Fig. 18 illustrates an example of an equivalence checking result 121b according to the third embodiment.

### Description of Embodiments

Hereinafter, embodiments of the present invention will be described, using the drawings. A same reference numeral is given to the same or equivalent portions in the respective drawings. In the description of the embodiments, explanation of the same or equivalent portions will be suitably omitted or simplified.

### First Embodiment

### *** Description of Configuration ***

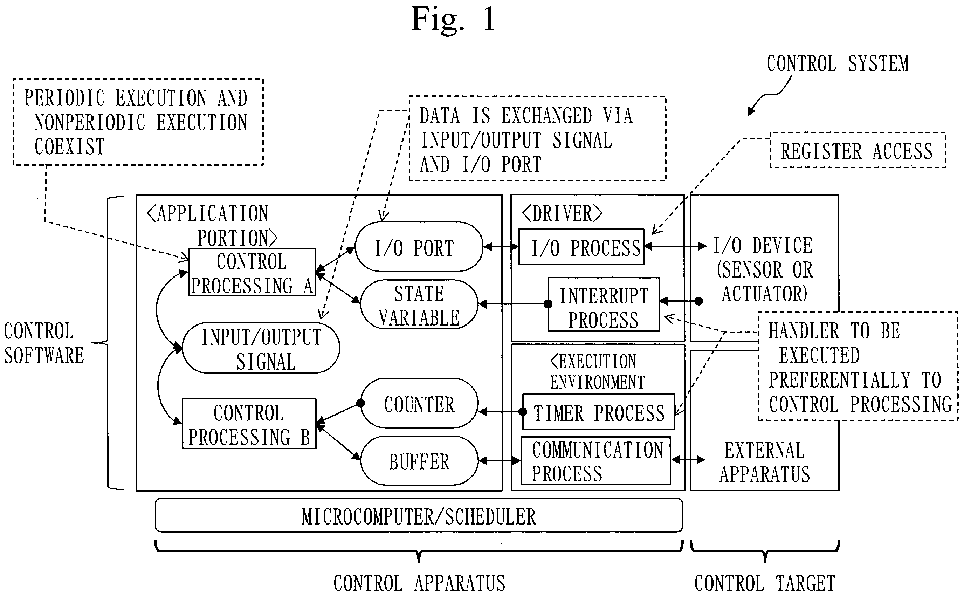

A configuration of a control system that will become an operation verification target of an operation verification apparatus 100 according to this embodiment will be described, using Fig. 1.

The control system is a system in which a control apparatus that is configured with control software and hardware and a control target such as a sensor, an actuator, or an external apparatus are connected by digital signal lines or analog signal lines. Connection relationships in the control system illustrated in Fig. 1 are typical, and the connection relationships in the control system are not limited to these connection relationships.

A software architecture depicting an overall configuration of the control software illustrated in Fig. 1 will be described.

The control system is constituted from an application to implement a functional requirement, an execution environment that is an environment to execute the application, and a driver.

The application is constituted from a plurality of control processings in which periodic execution and nonperiodic execution coexist.

The driver is constituted from an I/O process such as a register access and an interrupt process that has a higher priority than each control processing.

The execution environment is constituted from a timer process to perform scheduling and a communication process to perform communication.

The control system performs a control operation every moment while exchanging data among the application, the execution environment, and the driver.

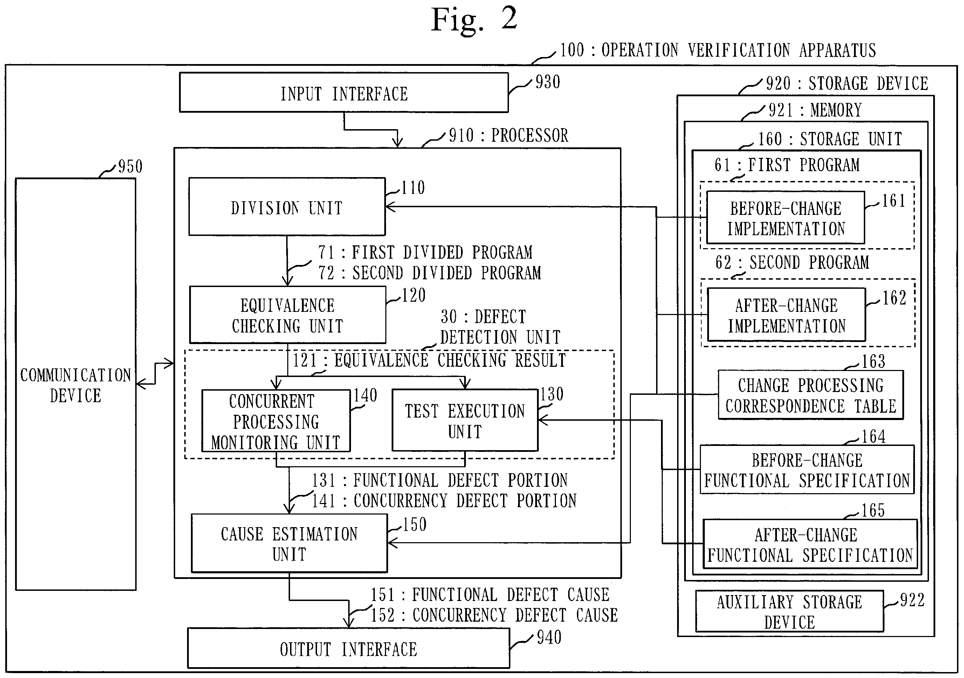

A configuration of the operation verification apparatus 100 according to this embodiment will be described, using Fig. 2.

As illustrated in Fig. 2, the operation verification apparatus 100 is a computer.

The operation verification apparatus 100 includes hardware such as a processor 910, a storage device 920, an input interface 930, an output interface 940, and a communication device 950. The storage device 920 includes a memory 921 and an auxiliary storage device 922.

The operation verification apparatus 100 includes a division unit 110, an equivalence checking unit 120, a defect detection unit 30, a cause estimation unit 150, and a storage unit 160, as a functional configuration. The defect detection unit 30 includes a test execution unit 130 and a concurrent processing monitoring unit 140. A before-change implementation 161, an after-change implementation 162, a concurrent processing correspondence table 163, a before-change functional specification 164, and an after-change functional specification 165 are stored in the storage unit 160.

A function of each of the division unit 110, the equivalence checking unit 120, the test execution unit 130, the concurrent processing monitoring unit 140, and the cause estimation unit 150 is implemented by software.

The storage unit 160 is implemented by the memory 921. The storage unit 160 may be implemented by the auxiliary storage device 922 alone, or the memory 921 and the auxiliary storage device 922. A method of implementing the storage unit 160 is arbitrary.

The processor 910 is connected to the other pieces of hardware via signal lines and controls these other pieces of hardware. The processor 910 is an IC (Integrated Circuit) to perform arithmetic processing. A specific example of the processor 910 is a CPU (Central Processing Unit), a DSP (Digital Signal Processor), or a GPU (Graphics Processing Unit).

The memory 921 is a storage device to temporarily store data. A specific example of the memory 921 is an SRAM (Static Random Access Memory) or a DRAM (Dynamic Random Access Memory).

The auxiliary storage device 922 is a storage device to hold data. A specific example of the auxiliary storage device 922 is an HDD (Hard Disk Drive). The auxiliary storage device 922 may be a portable storage medium such as an SD (registered trademark) (Secure Digital) memory card, a CF (CompactFlash), an NAND flash, a flexible disk, an optical disk, a compact disk, a blue-ray (registered trademark) disk, or a DVD (Digital Versatile Disk).

The input interface 930 is a port that is connected to an input device such as a mouse, a keyboard, or a touch panel. Specifically, the input interface 930 is a USB (Universal Serial Bus) terminal. The input interface 930 may be a port that is connected to a LAN (Local Area Network).

The output interface 940 is a port to which a cable of a display device such as a display is connected. Specifically, the output interface 940 is a USB terminal or an HDMI (registered trademark) (High Definition Multimedia Interface) terminal. Specifically, the display is an LCD (Liquid Crystal Display).

The communication device 950 performs communication with a different device via a network.

The communication device 950 includes a receiver and a transmitter. The communication device 950 is connected to a communication network such as a LAN, the Internet, or a telephone line by wire or wirelessly. Specifically, the communication device 950 is a communication chip or an NIC (Network Interface Card). The communication device 950 is a communication unit to communicate data. The receiver is a receiving unit to receive data. The transmitter is a transmitting unit to transmit data.

A program to implement the function of each of the division unit 110, the equivalence checking unit 120, the test execution unit 130, the concurrent processing monitoring unit 140, and the cause estimation unit 150 is stored in the auxiliary storage device 922. The program to implement the function of each of the division unit 110, the equivalence checking unit 120, the test execution unit 130, the concurrent processing monitoring unit 140, and the cause estimation unit 150 is also referred to as an operation verification program 620. This program is loaded into the memory 921, is read into the processor 910, and is executed by the processor 910. The auxiliary storage device 922 also stores an OS. At least a part of the OS stored by the auxiliary storage device 922 is loaded into the memory 921. The processor 910 executes the operation verification program 620 while executing the OS.

The operation verification apparatus 100 may include one processor 910 alone or a plurality of the processors 910. The plurality of processors 910 may cooperate and execute the program to implement the function of each of the division unit 110, the equivalence checking unit 120, the test execution unit 130, the concurrent processing monitoring unit 140, and the cause estimation unit 150.

Information, data, signal values, and variable values that indicate results of respective processes of the division unit 110, the equivalence checking unit 120, the test execution unit 130, the concurrent processing monitoring unit 140, and the cause estimation unit 150 are stored in the auxiliary storage device 922, the memory 921, or a register or a cache memory in the processor 910 in the operation verification apparatus 100.

The program to implement the function of each of the division unit 110, the equivalence checking unit 120, the test execution unit 130, the concurrent processing monitoring unit 140, and the cause estimation unit 150 may be stored in a portable recording medium. Specifically, the portable recording medium is a magnetic disk, a flexible disk, an optical disk, a compact disk, a blue-ray (registered trademark) disk, or a DVD (Digital Versatile Disk).

An operation verification program product is each of a storage medium and a storage device with the operation verification program 620 recorded therein. The operation verification program product refers to a product of any appearance in which a computer-readable program is loaded.

### *** Description of Functions ***

The division unit 110 reads the before-change implementation 161 of software, the after-change implementation 162 of the software, and the concurrent processing correspondence table 163.

The before-change implementation 161 is an example of a first program 61 including a plurality of control processings. The after-change implementation 162 is an example of a second program 62 including a plurality of control processings in which at least a part of the plurality of control processings of the first program 61 has been changed.

The division unit 110 divides the content of each control processing including a concurrent processing into a plurality of sequential processings in which a task context switch does not occur. The division unit 110 generates a before-change divided implementation 111 and an after-change divided implementation 112 by the division and outputs the before-change divided implementation 111 and the after-change divided implementation 112 to the equivalence checking unit 120. The before-change divided implementation 111 is an example of a first divided program 71. The after-change divided implementation 112 is an example of a second divided program 72.

The division unit 110 is also referred to as a divider into concurrent and sequential processings, or a concurrent and sequential division unit.

The equivalence checking unit 120 acquires, from the division unit 110, the before-change divided implementation 111 and the after-change divided implementation 112 and outputs an equivalence checking result 121. The equivalence checking result 121 is constituted from an equivalent portion and a different portion between the before-change divided implementation 111 and the after-change divided implementation 112.

The test execution unit 130 acquires the before-change functional specification 164, the after-change functional specification 165, and the equivalence checking result 121 and performs test case generation and test execution, thereby outputting a functional defect 131.

The concurrent processing monitoring unit 140 acquires the equivalence checking result 121, thereby outputting a concurrency defect 141.

The cause estimation unit 150 acquires each of the functional defect 131 and the concurrency defect 141 as a result of detection of occurrence of a new defect and acquires the concurrent processing correspondence table 163. Then, the cause estimation unit 150 checks the content of the control processing including each defect, the before-change divided implementation 111 and the after-change divided implementation 112, and a concurrent processing API described in the concurrent processing correspondence table 163, thereby estimating each of a functional defect cause 151 and a concurrency defect cause 152.

### *** Description of Operations ***

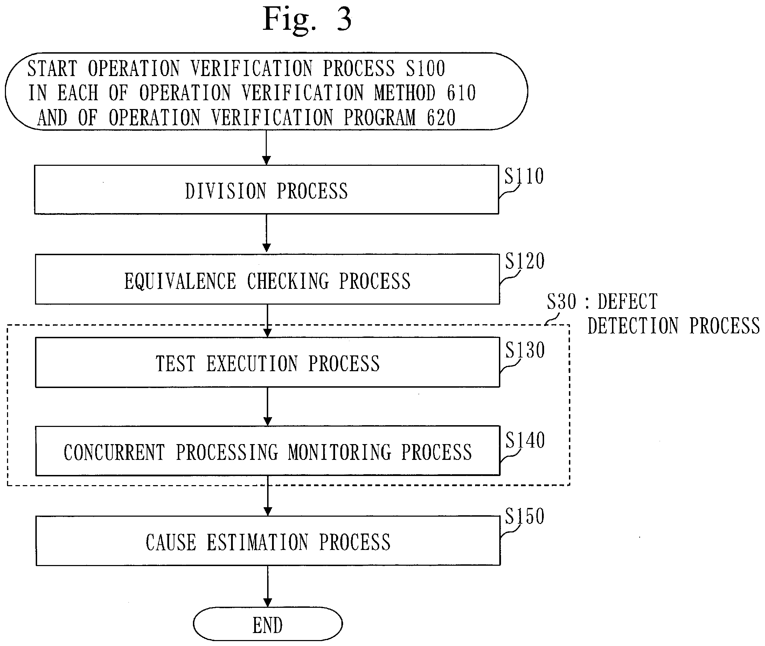

An operation verification process S100 in each of the operation verification method 610 and the operation verification program 620 according to this embodiment will be described, using Fig. 3.

The operation verification process S100 includes a division process S110, an equivalence checking process S120, a defect detection process S30, and a cause estimation process S150. The defect detection process S30 includes a test execution process S130 and a concurrent processing monitoring process S140.

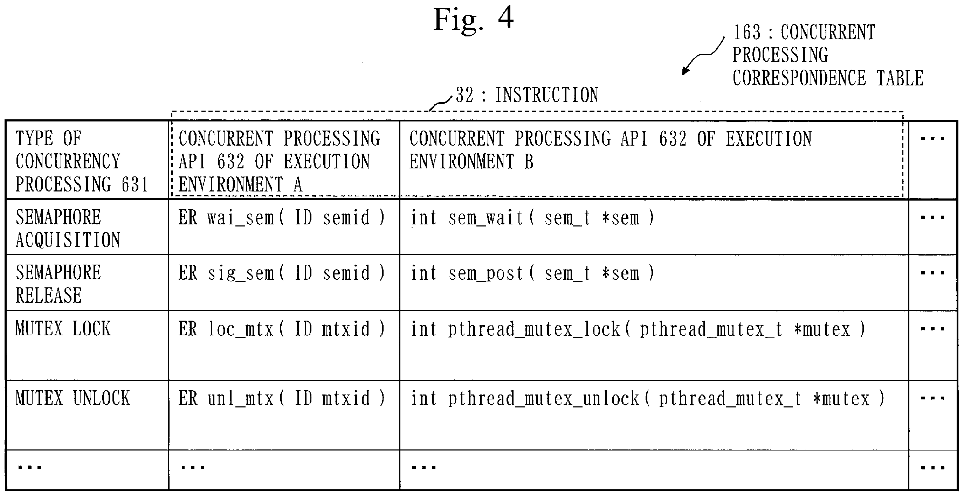

First, an example of the concurrent processing correspondence table 163 according to this embodiment will be described, using Fig. 4. In the concurrent processing correspondence table 163, an instruction 32 to implement each concurrency processing 631 is associated with the concurrency processing 631. More specifically, in the concurrent processing correspondence table 163, the instruction 32 is associated with the concurrency processing 631 for each program execution environment. The concurrency processing 631 is a type of a common concurrent processing to implement a concurrent processing in the plurality of control processings. The instruction 32 to implement the concurrency processing 631 is a concurrent processing API 632 to implement the concurrency processing 631. API is an abbreviation for Application Program Interface. That is, the concurrent processing correspondence table 163 is a table where each concurrency processing 631 and a corresponding rule of the concurrent processing API 632 inherent in an implementation environment have been defined. The concurrency processing 631 has types of semaphore acquisition, semaphore release, mutex lock, and mutex unlock. The signature of a function or a method is set in the concurrent processing API 632 that is inherent in the implementation environment. In the concurrent processing correspondence table 163, each concurrency processing 631 and the concurrent processing API 632 inherent in the implementation environment are associated with each other.

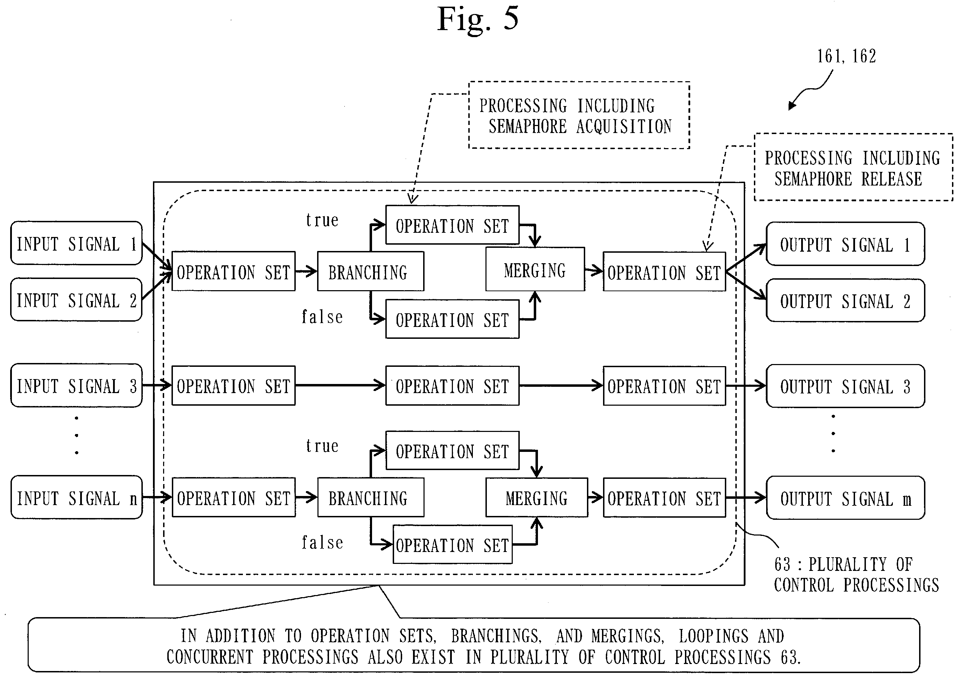

A description will be given to an example of each of the before-change implementation 161 and the after-change implementation 162 according to this embodiment, using Fig. 5. Fig. 5 illustrates the example common to the before-change implementation 161 and the after-change implementation 162. The before-change implementation 161 includes a plurality of control processings 63. Specifically, the plurality of control processings 63 are processings such as operation sets, branchings, mergings, and loopings. The after-change implementation 162 includes a plurality of control processings in which at least a part of the plurality of control processings 63 of the before-change implementation 161 has been changed. The plurality of control processings 63 may include a concurrent processing, in addition to the operation sets.

Each of the before-change implementation 161 and the after-change implementation 162 has a control processing not including the concurrency processing 631 and a control processing including the concurrency processing 631. Specifically, operation sets included in each of the before-change implementation 161 and the after-change implementation 162 has an operation set not including the concurrency processing API 632 and an operation set including the concurrent processing API 632. Referring to Fig. 5, as the operation sets including the concurrent processing APIs, there are the operation set including the semaphore acquisition and the operation set including the semaphore release.

Herein, a difference between before the change and after the change is that a part or all of the contents of the plurality of control processings such as the operation sets, the concurrent processings, the branchings, the mergings, or the loopings is changed.

### <Division Process S110>

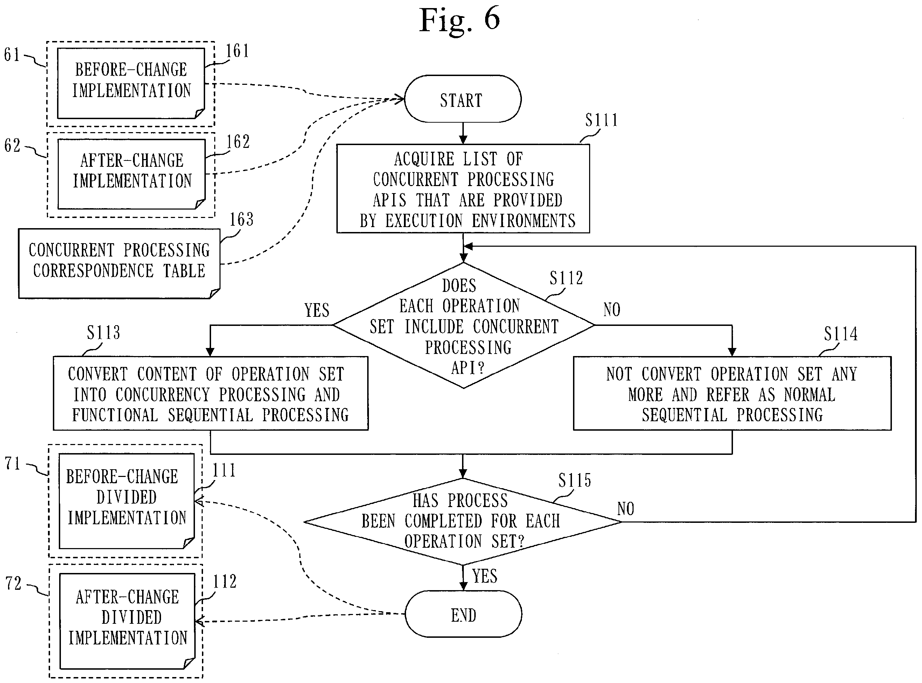

The division process S110 according to this embodiment will be described, using Fig. 6.

In the division process S110, the division unit 110 divides each of the plurality of control processings 63 into a concurrency processing 321 to implement a concurrent processing in the plurality of control processings and a functional sequential processing 320 to implement a function to be achieved by the plurality of control processings 63. The division unit 110 outputs the before-change implementation 161 in which each of the plurality of control processings 63 has been divided into the concurrency processing 321 and the functional sequential processing 320, as the before-change divided implementation 111. Further, the division unit 110 outputs the after-change implementation 162 in which each of the plurality of control processings 63 has been divided into the concurrency processing 321 and the functional sequential processing 320, as the after-change divided implementation 112. As described above, the before-change implementation 161 is the example of the first program 61. The after-change implementation 162 is the example of the second program 62. The before-change divided implementation 111 is the example of the first divided program 71. The after-change divided implementation 112 is the example of the second divided program 72.

Though the description using Fig. 6 to be described below illustrates a case where data to be processed is the before-change implementation 161, same processes as those in Fig. 6 are performed also when data to be processed is the after-change implementation 162.

In step Sill, the division unit 110 acquires, from the storage unit 160, the before-change implementation 161 of software to be verified and the concurrent processing correspondence table 163. The division unit 110 acquires, from the concurrent processing correspondence table 163 stored in the storage unit 160, a list of the concurrent processing APIs 632 that are the instructions 32. The division unit 110 acquires, from the concurrent processing correspondence table 163, the list of the concurrent processing APIs 632 that are provided by the execution environment of the before-change implementation 161 that is verification target software.

In step 112, the division unit 110 identifies, from among the plurality of control processings 63, one or more control processings each including one of the concurrent processing APIs 632 in the list of the concurrent processing APIs 632. Specifically, the division unit 110 collates the list of the concurrent processing APIs 632 and each operation set constituting the before-change implementation 161 and determines whether the concurrent processing API 632 is included in the operation set. If the concurrent processing API 632 is included in the operation set, the procedure proceeds to step S113. If the concurrent processing API 632 is not included in the operation set, the procedure proceeds to step S114.

The division unit 110 divides, from among the plurality of control processings 63, each control processing including the one of the concurrent processing APIs 632 in the list of the concurrent processing APIs 632 into the concurrency processing 321 including the concurrent processing API 632 and the functional sequential processing 320 not including the concurrent processing API 632. Specifically, the following process is performed.

In step S113, the division unit 110 divides the content of the operation set including the concurrent processing API 632 into the concurrency processing 321 that is a processing using the concurrent processing API and a partial operation set not including the processing using the concurrent processing API. Since each partial operation set obtained by the division is converted into a sequential processing in which the task context switch does not occur, this partial operation set is referred to as the functional sequential processing 320. The functional sequential processing 320 is also referred to as a divided sequential processing that has been obtained by conversion into the sequential processing by the division.

In step S114, the division unit 110 sets each operation set not including the concurrent processing API as a normal sequential processing 310. Originally, the task context switch does not occur in the operation set not including the concurrent processing API. Thus, no more conversion is performed, and the operation set not including the concurrent processing API is referred to as the normal sequential processing 310. The division unit 110 sets a result of the division of all the operation sets including one or more of the concurrent processing APIs 632, as the before-change divided implementation 111.

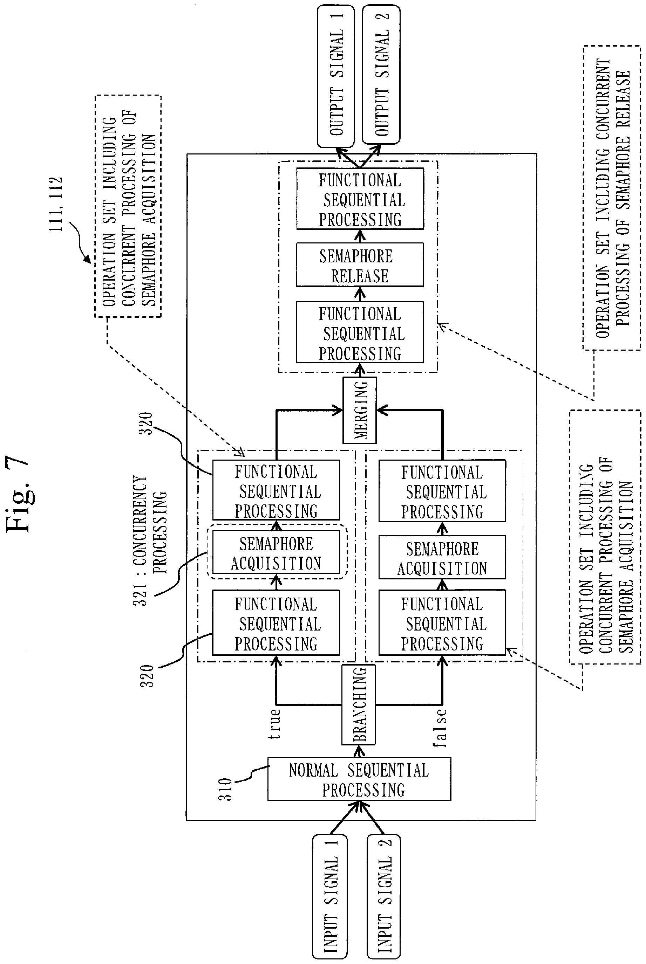

Fig. 7 illustrates an example of each of the before-change divided implementation 111 and after-change divided implementation 112 according to this embodiment. Fig. 7 illustrates the example common to the before-change divided implementation 111 and after-change divided implementation 112.

In the before-change divided implementation 111, each operation set not including the concurrent processing API 632 is set to the normal sequential processing 310. Specifically, the operation set including the concurrent processing API 632 is divided into the functional sequential processing 320, a semaphore acquisition processing that is the concurrency processing 631, and the functional sequential processing 320.

In step S115, the division unit 110 determines whether the process has been completed for each operation set and finishes the process if the process has been completed for each operation set. If there is the operation set for which the process has not been performed, the procedure returns to step S112 and the division unit 110 repeats the division process of the operation set.

The division unit 110 generates the after-change divided implementation 112 by the same process as that for the before-change divided implementation 111.

### <Equivalence Checking Process S120>

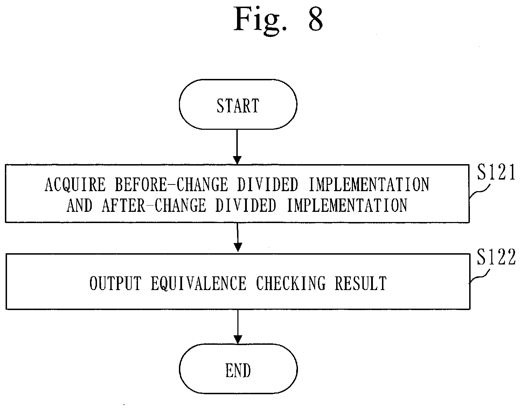

The equivalence checking process S120 according to this embodiment will be described, using Fig. 8.

In the equivalence checking process S120, the equivalence checking unit 120 checks equivalence between the before-change divided implementation 111 and the after-change divided implementation 112. The equivalence checking unit 120 outputs a different portion 212 that is different between the before-change divided implementation 111 and the after-change divided implementation 112 and an equivalent portion 211 that is equivalent between the before-change divided implementation 111 and the after-change divided implementation 112, as the equivalence checking result 121.

In step S121, the equivalence checking unit 120 acquires the before-change divided implementation 111 and the after-change divided implementation 112. Specifically, the equivalence checking unit 120 acquires the before-change divided implementation 111 and the after-change divided implementation 112 that have been output from the division unit 110.

In step S122, the equivalence checking unit 120 checks the equivalence between the before-change divided implementation 111 and the after-change divided implementation 112, using an equivalence check, and outputs the equivalence checking result 121. Specifically, using the equivalence check, the equivalence checking unit 120 outputs the equivalent portion 211 and the different portion 212 between the before-change divided implementation 111 and the after-change divided implementation 112, as the equivalence checking result 121.

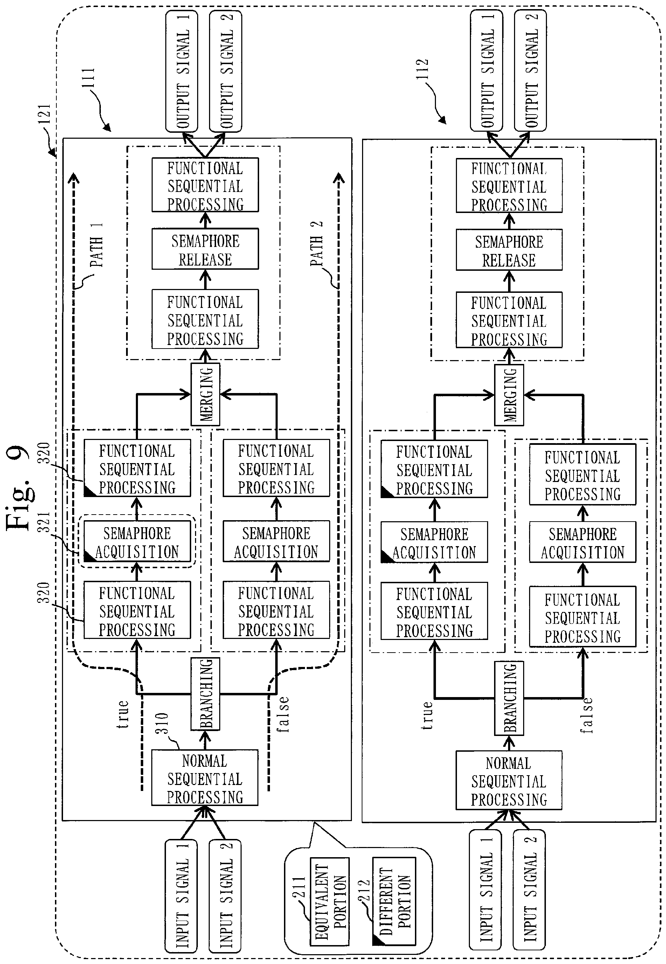

An example of the equivalence checking result 121 according to this embodiment will be described, using Fig. 9. Each processing represented by a rectangle with a black triangle in Fig. 9 indicates the different portion 212 between the before-change divided implementation 111 and the after-change divided implementation 112. Further, each processing represented just by a rectangle indicates the equivalent portion 211 between the before-change divided implementation 111 and the after-change divided implementation 112.

### <Defect Detection Process S30>

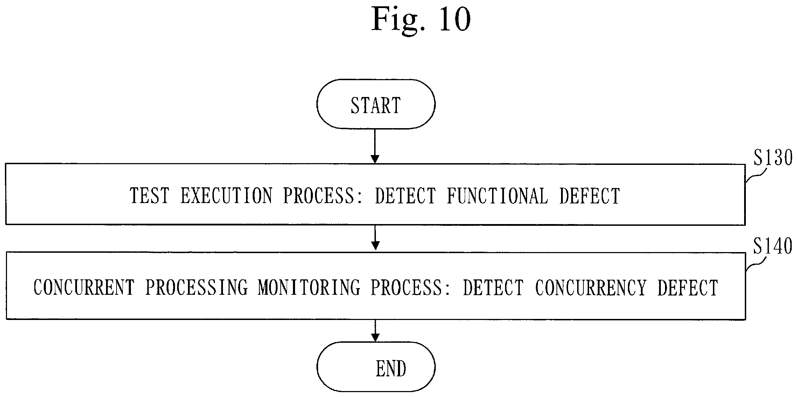

The defect detection process S30 according to this embodiment will be described, using Fig. 10.

In the defect detection process S30, the defect detection unit 30 detects the functional defect 131 or the concurrency defect 141 of the after-change divided implementation 112, based on the equivalence checking result 121.

In the test execution process S130, the test execution unit 130 acquires the before-change functional specification 164, the after-change functional specification 165, and the equivalence checking result 121, and generates a test case. The test execution unit 130 executes the test case, thereby outputting the functional defect 131. The functional defect 131 is a portion of the after-change divided implementation 112 in which a functional defect has been detected.

In the concurrent processing monitoring process S140, the concurrent processing monitoring unit 140 acquires the equivalence checking result 121, thereby outputting the concurrency defect 141. The concurrency defect 141 is a portion of the after-change divided implementation 122 in which a defect that is caused by the concurrent processing has been detected.

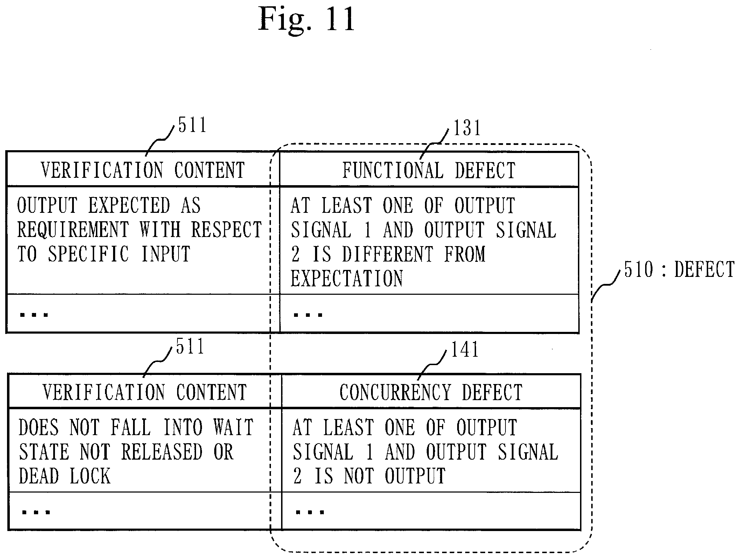

Fig. 11 includes tables illustrating respective examples of the functional defect 131 and the concurrency defect 141 according to this embodiment.

Each of the functional defect 131 and the concurrency defect 141 is a defect 510 that has occurred after the change with respect to verification content 511. Alternatively, each of the functional defect 131 and the concurrency defect 141 may be a defect portion in which the defect 510 has occurred after the change with respect to the verification content 511. As a specific example of the functional defect 131, there is a defect that "at least one of an output signal 1 and an output signal 2 is different from the expectation" for the content of verification with respect to "an output expected as a requirement, for a specific input". As a specific example of the concurrency defect 141, there is a defect that "at least one of the output signal 1 and the output signal 2 is not output" for the content of verification with respect to "not falling into a non-released wait state or a dead lock".

### <Cause Estimation Process S150>

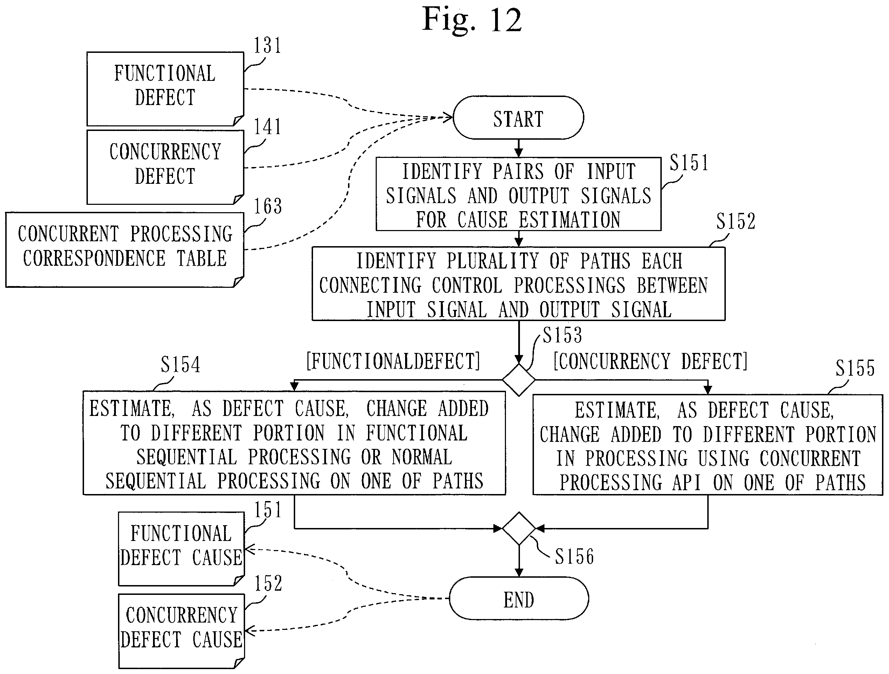

The cause estimation process S150 according to this embodiment will be described, using Fig. 12.

If the functional defect 131 has been detected in the after-change divided implementation 112 in the cause estimation process S150, the cause estimation unit 150 estimates the functional sequential processing 320 that is different between the before-change divided implementation 111 and the after-change divided implementation 112, as the cause of the functional defect 131. If the concurrency defect 141 has been detected in the after-change divided implementation 112, the cause estimation unit 150 estimates the concurrency processing 321 that is different between the before-change divided implementation 111 and the after-change divided implementation 112, as the cause of the concurrency defect 141. The cause of the functional defect 131 is referred to the functional defect cause 151. The cause of the concurrency defect 141 is referred to as the concurrency defect cause 152. The functional defect cause 151 and the concurrency defect cause 152 are also collectively referred to as a defect cause 520.

In step S151, the cause estimation unit 150 identifies pairs of input signals and output signals for which cause estimation is to be performed, based on the functional defect 131 or the concurrency defect 141. In the example in Fig. 11, the functional defect 131 that the "at least one of the output signal 1 and the output signal 2 is different from the expectation" is obtained for the content of the verification with respect to the "output expected as the requirement, for the specific input". In this case, the cause estimation unit 150 collates the before-change divided implementation 111 and the after-change divided implementation 112 and identifies that two pairs of an input signal 1 and the output signal 1 and an input signal 2 and the output signal 2 are to be subject to the cause estimation. In the example in Fig. 11, the concurrency defect 141 that the "at least one of the output signal 1 and the output signal 2 is not output" is obtained for the content of the verification with respect to "not falling into the non-released wait state or the dead-lock". In this case, the cause estimation unit 150 collates the before-change divided implementation 111 and the after-change divided implementation 112 and identifies that the pairs of the input signal 1 and the output signal 1 and the input signal 2 and the output signal 2 are to be subject to the cause estimation. Each of the verification contents and the defects illustrated in Fig. 11 is an example, and verification content and a defect may be arbitrary if they are verification content and a defect that can be handled by the test execution process S130 to implement test case generation and test execution or by the concurrent processing monitoring process S140 to implement the function of the concurrent processing monitoring unit.

In step S152, the cause estimation unit 150 identifies a plurality of paths each connecting the control processing such as the operation set, the branching, the merging, or the looping between an input signal and an output signal for which the cause estimation is to be performed. In the example of the after-change divided implementation 112 in Fig. 9, a path 1 and a path 2 are identified.

In step S153, the cause estimation unit 150 determines which one of the functional defect 131 and the concurrency defect 141 the defect is. If the defect is the functional defect 131, the procedure proceeds to step S154. If the defect is the concurrency defect 141, the procedure proceeds to step S155.

In step S154, the cause estimation unit 150 estimates a change applied to the different portion of the functional sequential processing 320 or the normal sequential processing 310 on one of the paths is the functional defect cause 151 because the cause of the functional defect is estimated. In the example of the after-change divided implementation 112 in Fig. 9, the cause estimation unit 150 estimates that the change applied to the functional sequential processing 320 represented by the rectangle with the black triangle is the functional defect cause 151.

In step S155, the cause estimation unit 150 estimates that a change applied to the different portion in the processing using the concurrent processing API on one of the paths is the concurrency defect cause 152 because the cause of the concurrency defect is investigated. In the example of the after-change divided implementation 112 in Fig. 9, the cause estimation unit 150 estimates the change applied to semaphore acquisition represented by the rectangle with the black triangle is the concurrency defect cause 152.

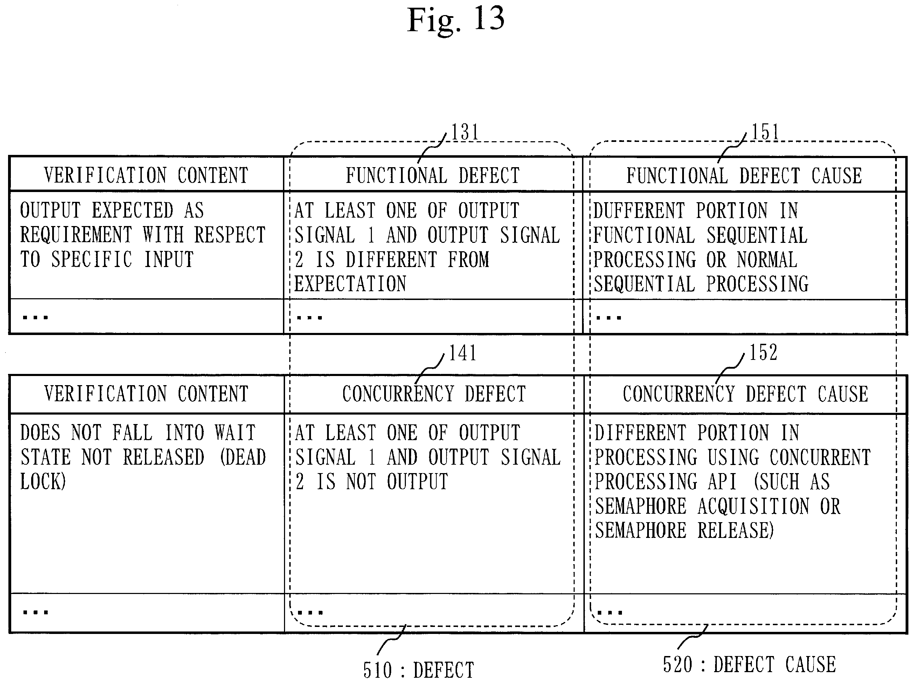

Fig. 13 includes tables illustrating respective examples of the functional defect cause 151 and the concurrency defect cause 152 according to this embodiment.

Herein, the change applied to the different portion in the functional sequential processing or the normal sequential processing in the software or the program is a change of a part or all of the control processings included in the program. Each control processing is a processing such as the operation set, the branching, the merging, or the looping. The change applied to the different portion in the processing using the concurrent processing API is a change of a part or all of a processing with respect to an argument and a processing with respect to a return value without changing the concurrent processing API in use.

### *** Alternative Configuration ***

In this embodiment, the functions of the division unit 110, the equivalence checking unit 120, the test execution unit 130, the concurrent processing monitoring unit 140, and the cause estimation unit 150 are implemented by the software. As a variation example, however, the functions of the division unit 110, the equivalence checking unit 120, the test execution unit 130, the concurrent processing monitoring unit 140, and the cause estimation unit 150 may be implemented by hardware.

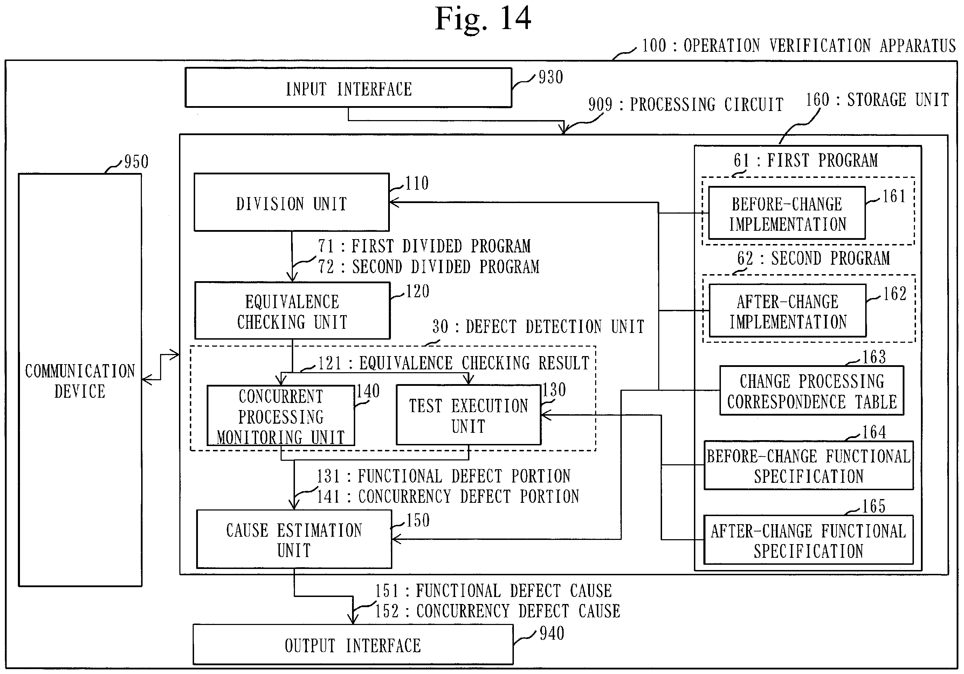

A configuration of an operation verification apparatus 100 according to the variation example of this embodiment will be described, using Fig. 14.

As illustrated in Fig. 14, the operation verification apparatus 100 includes the hardware such as a processing circuit 909, the input interface 930, the output interface 940, and the communication device 950.

The processing circuit 909 is a dedicated electronic circuit to implement the storage unit 160 and the functions of the division unit 110, the equivalence checking unit 120, the test execution unit 130, the concurrent processing monitoring unit 140, and the cause estimation unit 150. Specifically, the processing circuit 909 is a single circuit, a composite circuit, a programmed processor, a parallel programed processor, a logic IC, a GA, an ASIC, or an FPGA. The GA is an abbreviation for Gate Array. The ASIC is an abbreviation for Application Specific Integrated Circuit. The FPGA is an abbreviation for Field-Programmable Gate Array.

The functions of the division unit 110, the equivalence checking unit 120, the test execution unit 130, the concurrent processing monitoring unit 140, and the cause estimation unit 150 may be implemented by one processing circuit 909 or may be distributed into a plurality of the processing circuits 909 and implemented.

As another variation example, the functions of the division unit 110, the equivalence checking unit 120, the test execution unit 130, the concurrent processing monitoring unit 140, and the cause estimation unit 150 may be implemented by a combination of software and hardware. That is, a part of the functions of the operation verification apparatus 100 may be implemented by dedicated hardware and the remainder of the functions may be implemented by the software.

The processor 910, the storage device 920, and the processing circuit 909 of the operation verification apparatus 100 are collectively referred to as "processing circuitry". That is, even if the configuration of the operation verification apparatus 100 is the one illustrated in one of Fig. 2 and Fig. 14, the storage unit 160 and the functions of the division unit 110, the equivalence checking unit 120, the test execution unit 130, the concurrent processing monitoring unit 140, and the cause estimation unit 150 are implemented by the processing circuitry.

Each "unit" may be read as a "step", a "procedure", or a "process". Further, the function of each "unit" may be implemented by firmware.

### *** Description of Effects of This Embodiment ***

In the operation verification apparatus 100 according to this embodiment, each control processing including the concurrent processing such as each of the semaphore acquisition and the semaphore release is divided into the plurality of sequential processings in which the task context switch does not occur, without changing operation content at all. With this arrangement, according to the operation verification apparatus 100 in this embodiment, the equivalence check can be applied to a multi-task configuration. Consequently, according to the operation verification apparatus 100 in this embodiment, an application range of an impact analysis that becomes a key for quality assurance and improvement of work efficiency in a transition to or the operation of differential and derivative development is broaden from software of the single task configuration to software of the multi-task configuration. An improvement in productivity of all control software development can be thereby implemented.

According to the operation verification apparatus 100 in this embodiment, it can be estimated by which sequential processing's change or by which concurrent processing's change, each of a functional defect and a concurrency defect is caused, in cause estimation that needed an enormous amount of work after detection of each of the functional defect and the concurrency defect. Consequently, according to the operation verification apparatus 100 in this embodiment, a changed portion of software which will become the cause of a defect can be automatically estimated. Thus, according to the operation verification apparatus 100 in this embodiment, an amount of work that is needed for verification and testing can be greatly reduced.

### Second Embodiment

In this embodiment, a difference from the first embodiment will be mainly described. In this embodiment, a same reference numeral is given to a same component as that described in the first embodiment, and explanation of the component will be omitted.

In the first embodiment, the description has been given about a case where a one-to-one correspondence exists between a common concurrency processing and a concurrent processing API that is inherent in an implementation environment. In the second embodiment, a description will be given about a case where a one-to-multiple correspondence exists between a common concurrency processing and concurrent processing APIs each of which is inherent in an implementation environment.

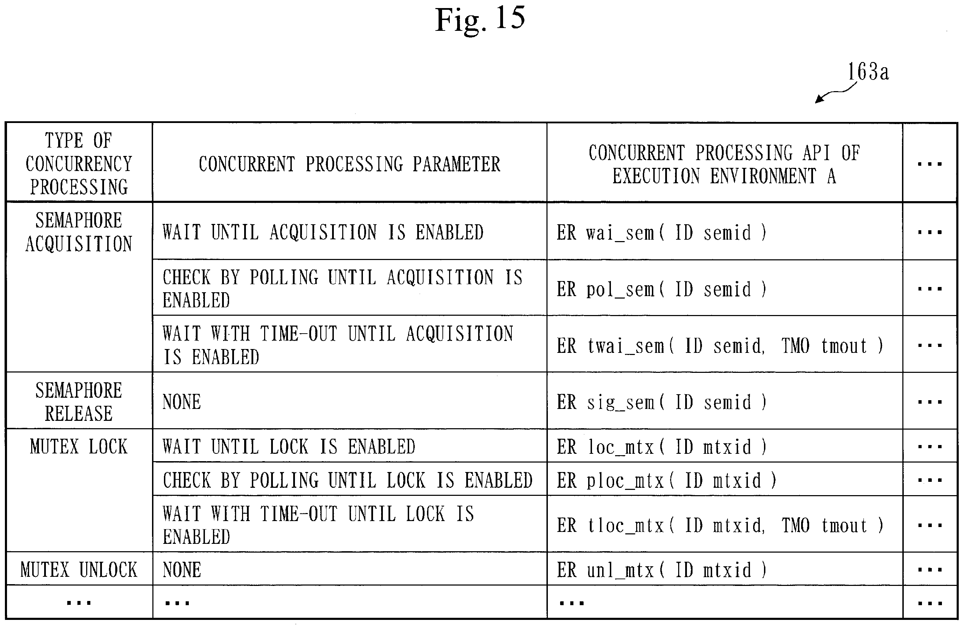

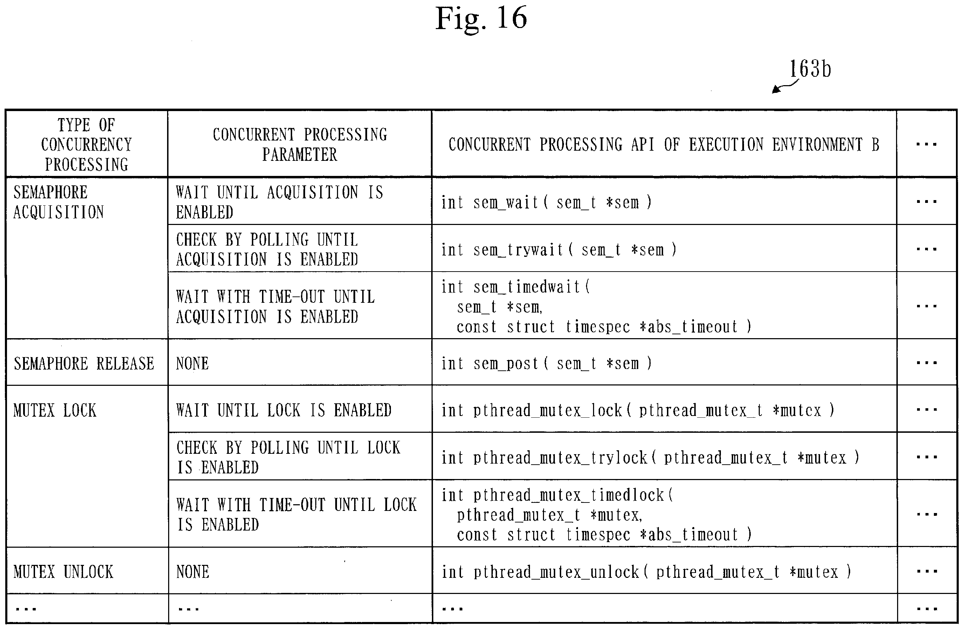

Fig. 15 and Fig. 16 respectively illustrate examples of a concurrent processing correspondence table 163a and a concurrent processing correspondence table 163b according to this embodiment.

In each of the concurrent processing correspondence tables 163a and 163b according to this embodiment, an instruction for each parameter of a concurrency processing 321 is associated with a type of the concurrency processing 321. In each of the concurrent processing correspondence tables 163a and 163b, a plurality of the concurrent processing APIs which are functionally the same but whose concurrent processing parameters for use are different are associated with one concurrency processing. In the concurrent processing correspondence table 163a in Fig. 15, with respect to semaphore acquisition that is the concurrency processing, one concurrent processing API of an execution environment A is associated with each of three concurrent processing parameters of "wait until the acquisition is enabled", "check by polling until the acquisition is enabled", and "wait with a time-out until the acquisition is enabled". In the concurrent processing correspondence table 163b in Fig. 16, one concurrent processing API of an execution environment B is associated with each of the three concurrent processing parameters with respect to the semaphore acquisition, as in Fig. 15.

Then, the division unit 110 acquires a list of concurrent processing APIs 632 from each of the concurrent processing correspondence table 163a and 163b. The division unit 110 divides, from among a plurality of control processings, each control processing including one of the concurrent processing APIs 632 in the list of the concurrent processing APIs 632 into a concurrency processing 321 including the concurrent processing API 632 and a functional sequential processing 320 not including the concurrent processing API 632. Specifically, in the division process S110 described using Fig. 6 in the first embodiment, the division unit 110 identifies each control processing using the concurrent processing API with the concurrency processing therefor being the same but just having a different concurrent processing parameter, as a same processing using the concurrent processing API. Specifically, in step S113, the division unit 110 divides the content of each operation set including the concurrent processing API into the processing using the concurrent processing API and a partial operation set not including the processing using the concurrent processing API. In this case, the division unit 110 identifies each control processing using the concurrent processing API with the concurrency processing therefor being the same but just having the different concurrent processing parameter, as the same processing using the concurrent processing API.

In this embodiment, it is assumed that, in the cause estimation process S150 described using Fig. 12 in the first embodiment, a change applied to a different portion in the processing using the concurrent processing API is a change of a part or all of the concurrent processing API in use, a processing with respect to an argument, and a processing with respect to a return value.

According to the operation verification apparatus 100 in this embodiment, similar effects to those in the first embodiment can be obtained.

### Third Embodiment

In this embodiment, a difference from the first embodiment will be mainly described. A same reference numeral is given to a same component as that described in the first embodiment, and explanation of the component will be omitted.

In the first embodiment, the description has been given about the case where the change applied to the different portion in the concurrency processing 321 is the change of the part or the all of the processing with respect to the argument and the processing with respect to the return value without changing the concurrent processing API in use. In the third embodiment, a description will be given about a case where a change applied to a concurrency processing 321 is addition of a concurrent processing API to be used or deletion of a concurrent processing API in use.

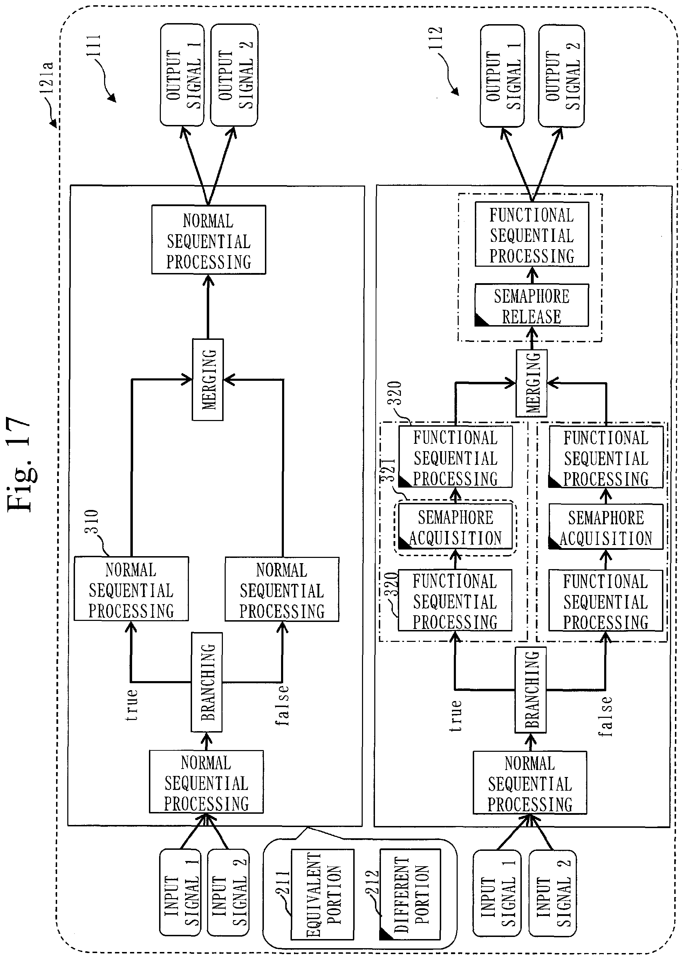

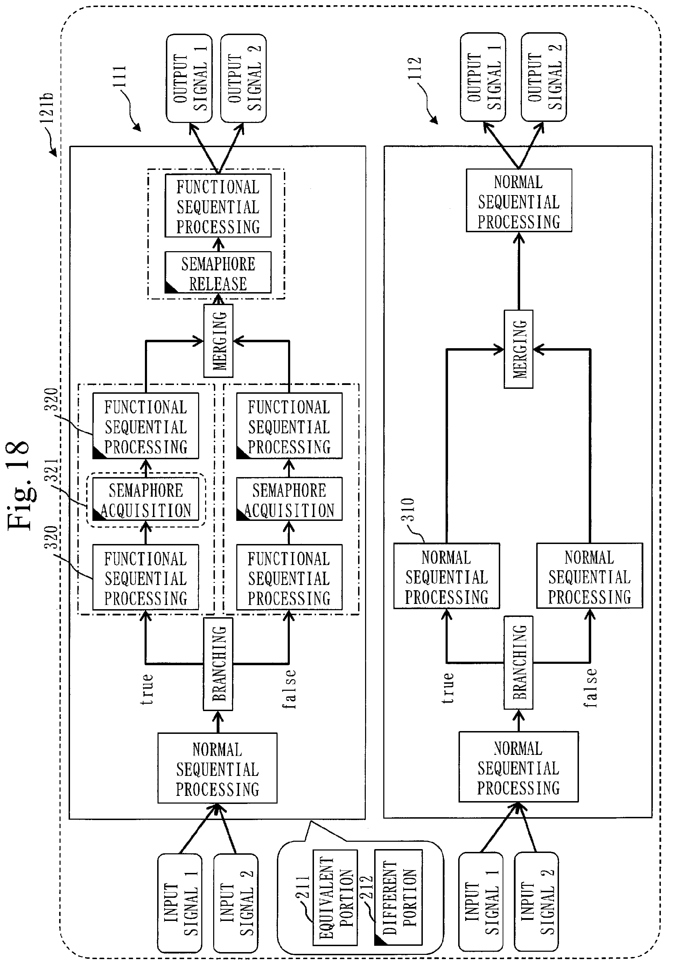

Fig. 17 and Fig. 18 are diagrams illustrating respective examples of equivalence checking results 121a and 121b according to this embodiment.

Fig. 17 illustrates the example of the equivalence checking result 121a when the concurrent processing API to be used has been added by the change. A processing that uses the concurrent processing API that has been added is present in an after-change divided implementation 112 alone.

Fig. 18 illustrates the example of the equivalence checking result 121b when the concurrent processing API in use has been deleted by the change. A processing that uses the concurrent processing API that has been deleted is present in a before-change divided implementation 111 alone.

Then, in the cause estimation process S150 described in the first embodiment using Fig. 12, the cause estimation unit 150 compares paths of the before-change divided implementation 111 and the after-change divided implementation 112 that have been identified as a target for cause investigation. If the concurrent processing API to be used has been added, the cause estimation unit 150 estimates a different portion in a control processing on one of the paths of the after-change divided implementation 112 to be a defect cause. If the concurrent processing API in use has been deleted, the cause estimation unit 150 estimates a different portion in a control processing on one of the paths of the before-change divided implementation 111 to be a defect cause.

According to the operation verification apparatus 100 in this embodiment, similar effects to those in the first embodiment can be obtained.

In each of the first to third embodiments, each of the division unit 110, the equivalence checking unit 120, the test execution unit 130, the concurrent processing monitoring unit 140, and the cause estimation unit 150 is an independent functional block. The configuration of the operation verification apparatus 100, however, does not need to be the above-mentioned configuration, and is arbitrary. Functional blocks of the operation verification apparatus 100 are arbitrary if they can implement the functions described in the above-mentioned embodiments. The operation verification apparatus 100 may be configured with any combination of these functional blocks or an arbitrary block configuration.

The operation verification apparatus 100 may be a system constituted from a plurality of apparatuses rather than one apparatus.

Though the description has been given about the first to third embodiments, a plurality of portions of these embodiments may be carried out in combination. Alternatively, one portion of these embodiments may be carried out. In addition, these embodiments may be wholly or partially carried out in any combination.

Each embodiment mentioned above is an essentially preferred illustration, and does not intend to limit the present invention, and an application and an application range of the present invention. Various modifications are possible as necessary.

### Reference Signs List

30: defect detection unit; 32: instruction; 61: first program; 62: second program; 63: plurality of control processings; 71: first divided program; 72: second divided program; 100: operation verification apparatus; 110: division unit; 111: before-change divided implementation; 112: after-change divided implementation; 120: equivalence checking unit; 121, 121a, 121b: equivalence checking result; 130: test execution unit; 131: functional defect; 140: concurrent processing monitoring unit; 141: concurrency defect; 150: cause estimation unit; 151: functional defect cause; 152: concurrency defect cause; 160: storage unit; 161: before-change implementation; 162: after-change implementation; 163, 163a, 163b: concurrent processing correspondence table; 164: before-change functional specification; 165: after-change functional specification; 211: equivalent portion; 212: different portion; 320: functional sequential processing; 321: concurrency processing; 310: normal sequential processing; 510: defect; 511: verification content; 520: defect cause; 610: operation verification method; 620: operation verification program; 909: processing circuit; 910: processor; 920: storage device; 921: memory; 922: auxiliary storage device; 930: input interface; 940: output interface; 950: communication device; S100: operation verification process; S110: division process; S120: equivalence checking process; S30: defect detection process; S130: test execution process; S140: concurrent processing monitoring process; S150: cause estimation process.

## Claims

1. An operation verification apparatus (100) comprising:
a division unit (110) to read a first program (61) including a plurality of control processings (63) and a second program (62) including a plurality of control processings where at least a portion of the plurality of control processings of the first program has been changed, to divide each of the plurality of control processings into a concurrency processing (321) to implement a concurrent processing in the plurality of control processings and a functional sequential processing (320) to implement a function to be achieved by the plurality of control processings, to output the first program with each of the plurality of control processings therein divided into the concurrency processing and the functional sequential processing as a first divided program (71), and to output the second program with each of the plurality of control processings therein divided into the concurrency processing and the functional sequential processing as a second divided program (72); wherein the plurality of control processings (63) are processings including operation sets, branchings, mergings, and loopings; and
a cause estimation unit (150) to estimate the functional sequential processing that is different between the first divided program and the second divided program as a cause of a functional defect when the defect of the function is detected in the second divided program as the functional defect and to estimate the concurrency processing that is different between the first divided program and the second divided program as a cause of a concurrency defect when the defect that is caused by the concurrent processing is detected in the second divided program as the concurrency defect.

2. The operation verification apparatus (100) according to claim 1, comprising:
an equivalence checking unit (120) to check equivalence between the first divided program (71) and the second divided program (72) and to output a different portion (212) that is different between the first divided program and the second divided program and an equivalent portion (211) that is equivalent between the first divided program and the second divided program, as an equivalence checking result; and
a defect detection unit (30) to detect the functional defect or the concurrency defect in the second divided program, based on the equivalence checking result.

3. The operation verification apparatus (100) according to claim 1 or 2, comprising:
a storage unit (160) to store a concurrent processing correspondence table (163) with each of instructions (32) to implement the concurrency processing (321) associated with the concurrency processing, and
wherein the division unit (110) acquires a list of the instructions from the concurrent processing correspondence table that is stored by the storage unit and divides, from among the plurality of control processings (63), each control processing including one of the instructions in the list of the instructions into the concurrency processing including the instruction and the functional sequential processing (320) not including the instruction.

4. The operation verification apparatus (100) according to claim 3,
wherein the storage unit (160) stores the concurrent processing correspondence table (163) with the instruction (32) associated with the concurrency processing (321), for each program execution environment, and
wherein the division unit (110) acquires, from the concurrent processing correspondence table, the list of the instructions that are each provided by the execution environment of each of the first program (61) and the second program (62).

5. The operation verification apparatus (100) according to claim 1 or 2, comprising:
a storage unit (160) to store the concurrent processing correspondence table (163a) with each of instructions (32) for each parameter of the concurrency processing (321) associated with the concurrency processing,
wherein the division unit (110) acquires, from the concurrent processing correspondence table, a list of the instructions and divides, from among the plurality of control processings (63), each control processing including one of the instructions in the list of the instructions into the concurrency processing including the instruction and the functional sequential processing (320) not including the instruction.

6. The operation verification apparatus (100) according to any one of claims 1 to 5,
wherein the change added to the second program (62) is a change of processing content of at least one of the plurality of control processings (63), a change that is caused by addition of a new control processing, or a change that is caused by deletion of at least one of the plurality of control processings.

7. An operation verification method (610) comprising:
by a division unit (110), reading each of a first program (61) including a plurality of control processings (63) and a second program (62) including a plurality of control processings where at least a portion of the plurality of control processings of the first program has been changed, dividing each of the plurality of control processings into a concurrency processing (321) to implement a concurrent processing in the plurality of control processings and a functional sequential processing (320) to implement a function to be achieved by the plurality of control processings, outputting the first program with each of the plurality of control processings therein divided into the concurrency processing and the functional sequential processing as a first divided program (71), and outputting the second program with each of the plurality of control processings therein divided into the concurrency processing and the functional sequential processing as a second divided program (72); wherein the plurality of control processings (63) are processings including operation sets, branchings, mergings, and loopings; and
by a cause estimation unit (150), estimating the functional sequential processing that is different between the first divided program and the second divided program as a cause of a functional defect when the defect of the function is detected in the second divided program as the functional defect and estimating the concurrency processing that is different between the first divided program and the second divided program as a cause of a concurrency defect when the defect that is caused by the concurrent processing is detected in the second divided program as the concurrency defect.

8. An operation verification program (620) to cause a computer to execute:
a division process of reading each of a first program (61) including a plurality of control processings (63) and a second program (62) including a plurality of control processings where at least a portion of the plurality of control processings of the first program has been changed, dividing each of the plurality of control processings into a concurrency processing (321) to implement a concurrent processing in the plurality of control processings and a functional sequential processing (320) to implement a function to be achieved by the plurality of control processings, outputting the first program with each of the plurality of control processings therein divided into the concurrency processing and the functional sequential processing as a first divided program (71), and outputting the second program with each of the control processings therein divided into the concurrency processing and the functional sequential processing as a second divided program (72); wherein the plurality of control processings (63) are processings including operation sets, branchings, mergings, and loopings; and
a cause estimation process of estimating the functional sequential processing that is different between the first divided program and the second divided program as a cause of a functional defect when the defect of the function is detected in the second divided program as the functional defect and estimating the concurrency processing that is different between the first divided program and the second divided program as a cause of a concurrency defect when the defect that is caused by the concurrent processing is detected in the second divided program as the concurrency defect.

## Patentansprüche

1. Bedienungsverifizierungsvorrichtung (100), umfassend:
eine Teilungseinheit (110) zum Lesen eines ersten Programms (61), das eine Vielzahl von Steuerungsverarbeitungen (63) aufweist, und eines zweiten Programms (62), das eine Vielzahl von Steuerungsverarbeitungen aufweist, wobei zumindest ein Teil der Vielzahl von Steuerungsverarbeitungen des ersten Programms verändert wurde, zum Teilen jeder der Vielzahl von Steuerungsverarbeitungen in eine Gleichzeitigkeitsverarbeitung (321), um eine gleichzeitige Verarbeitung in der Vielzahl von Steuerungsverarbeitungen zu implementieren, und einer funktionalen sequentiellen Verarbeitung (320), um eine Funktion zu implementieren, die durch die Vielzahl von Steuerungsverarbeitungen erreicht werden soll, zum Ausgeben des ersten Programms mit jeder der Vielzahl von darin enthaltenen Steuerungsverarbeitungen, die in die Gleichzeitigkeitsverarbeitung und die funktionale sequentielle Verarbeitung unterteilt sind, als ein erstes geteiltes Programm (71), und zum Ausgeben des zweiten Programms mit jeder der Vielzahl von darin enthaltenen Steuerungsverarbeitungen, die in die Gleichzeitigkeitsverarbeitung und die funktionale sequentielle Verarbeitung unterteilt sind, als ein zweites geteiltes Programm (72); wobei die Vielzahl von Steuerungsverarbeitungen (63) Verarbeitungen sind, die Bedienungssätze, Verzweigungen, Zusammenführungen und Schleifen umfassen; und
eine Ursachenschätzungseinheit (150) zum Schätzen der funktionalen sequentiellen Verarbeitung, die sich zwischen dem ersten geteilten Programm und dem zweiten geteilten Programm unterscheidet, als Ursache eines funktionalen Defekts, wenn der Defekt der Funktion in dem zweiten geteilten Programm als der funktionale Defekt erfasst wird, und zum Schätzen der Gleichzeitigkeitsverarbeitung, die sich zwischen dem ersten geteilten Programm und dem zweiten geteilten Programm unterscheidet, als Ursache eines Gleichzeitigkeitsdefekts, wenn der Defekt, der durch die gleichzeitige Verarbeitung verursacht wird, in dem zweiten geteilten Programm als der Gleichzeitigkeitsdefekt erfasst wird.

2. Bedienungsverifizierungsvorrichtung (100) nach Anspruch 1, umfassend:
eine Äquivalenzprüfeinheit (120) zum Prüfen der Äquivalenz zwischen dem ersten geteilten Programm (71) und dem zweiten geteilten Programm (72) und zum Ausgeben eines unterschiedlichen Teils (212), der sich zwischen dem ersten geteilten Programm und dem zweiten geteilten Programm unterscheidet, und eines äquivalenten Teils (211), der zwischen dem ersten geteilten Programm und dem zweiten geteilten Programm äquivalent ist, als ein Äquivalenzprüfergebnis;
und eine Defekterfassungseinheit (30) zum Erfassen des funktionalen Defekts oder des Gleichzeitigkeitsdefekts im zweiten geteilten Programm auf Grundlage des Äquivalenzprüfergebnisses.

3. Bedienungsverifizierungsvorrichtung (100) nach Anspruch 1 oder 2, umfassend:
eine Speichereinheit (160) zum Speichern einer Gleichzeitigkeitsverarbeitungsentsprechungstabelle (163) mit sämtlichen Befehlen (32), um die Gleichzeitigkeitsverarbeitung (321), die mit der Gleichzeitigkeitsverarbeitung assoziiert ist, zu implementieren, und
wobei die Teilungseinheit (110) eine Liste der Befehle aus der Gleichzeitigkeitsverarbeitungsentsprechungstabelle erwirbt, die von der Speichereinheit gespeichert wird, und aus der Vielzahl von Steuerungsverarbeitungen (63) jede Steuerungsverarbeitung, die einen der Befehle in der Liste der Befehle enthält, in die Gleichzeitigkeitsverarbeitung, die den Befehl enthält, und die funktionale sequentielle Verarbeitung (320), die den Befehl nicht enthält, unterteilt.

4. Bedienungsverifizierungsvorrichtung (100) nach Anspruch 3,
wobei die Speichereinheit (160) die Gleichzeitigkeitsverarbeitungsentsprechungstabelle (163) mit dem Befehl (32), der mit der Gleichzeitigkeitsverarbeitung (321) assoziiert ist, für jede Programmausführungsumgebung speichert, und
wobei die Teilungseinheit (110) von der Gleichzeitigkeitsverarbeitungsentsprechungstabelle die Liste der Befehle, die jeweils durch die Ausführungsumgebung von jedem des ersten Programms (61) und des zweiten Programms (62) bereitgestellt werden, erwirbt.

5. Bedienungsverifizierungsvorrichtung (100) nach Anspruch 1 oder 2, umfassend:
eine Speichereinheit (160) zum Speichern der Gleichzeitigkeitsverarbeitungsentsprechungstabelle (163a) mit sämtlichen Befehlen (32) für jeden Parameter der Gleichzeitigkeitsverarbeitung (321), die mit der Gleichzeitigkeitsverarbeitung assoziiert ist,
wobei die Teilungseinheit (110) aus der Gleichzeitigkeitsverarbeitungsentsprechungstabelle eine Liste der Befehle erwirbt und aus der Vielzahl von Steuerungsverarbeitungen (63) jede Steuerungsverarbeitung, die einen der Befehle in der Liste der Befehle enthält, in die Gleichzeitigkeitsverarbeitung, die den Befehl enthält, und die funktionale sequentielle Verarbeitung (320), die den Befehl nicht enthält, unterteilt.

6. Bedienungsverifizierungsvorrichtung (100) nach einem der Ansprüche 1 bis 5,
wobei die zu dem zweiten Programm (62) hinzugefügte Änderung eine Änderung von Verarbeitungsinhalt von zumindest einer der Vielzahl von Steuerungsverarbeitungen (63), eine Änderung, die durch Hinzufügen einer neuen Steuerungsverarbeitung verursacht wird, oder eine Änderung, die durch Löschen von zumindest einer der Vielzahl von Steuerungsverarbeitungen verursacht wird, ist.

7. Bedienungsverifizierungsverfahren (610), umfassend:
durch eine Teilungseinheit (110), Lesen eines ersten Programms (61), das eine Vielzahl von Steuerungsverarbeitungen (63) aufweist, und eines zweiten Programms (62), das eine Vielzahl von Steuerungsverarbeitungen aufweist, wobei zumindest ein Teil der Vielzahl von Steuerungsverarbeitungen des ersten Programms verändert wurde, Unterteilen jeder der Vielzahl von Steuerungsverarbeitungen in eine Gleichzeitigkeitsverarbeitung (321), um eine Gleichzeitigkeitsverarbeitung in der Vielzahl von Steuerungsverarbeitungen zu implementieren, und eine funktionale sequentielle Verarbeitung (320), um eine Funktion zu implementieren, die durch die Vielzahl von Steuerungsverarbeitungen erreicht werden soll, Ausgeben des ersten Programms mit jeder der Vielzahl von darin enthaltenen Steuerungsverarbeitungen, die in die Gleichzeitigkeitsverarbeitung und die funktionale sequentielle Verarbeitung unterteilt sind, als ein erstes geteiltes Programm (71), und Ausgeben des zweiten Programms mit jeder der Vielzahl von darin enthaltenen Steuerungsverarbeitungen, die in die Gleichzeitigkeitsverarbeitung und die funktionale sequentielle Verarbeitung unterteilt sind, als ein zweites geteiltes Programm (72); wobei die Vielzahl von Steuerungsverarbeitungen (63) Verarbeitungen sind, die Bedienungssätze, Verzweigungen, Zusammenführungen und Schleifen umfassen; und
durch eine Ursachenschätzungseinheit (150), Schätzen der funktionalen sequentiellen Verarbeitung, die sich zwischen dem ersten geteilten Programm und dem zweiten geteilten Programm unterscheidet, als eine Ursache eines funktionalen Defekts, wenn der Defekt der Funktion in dem zweiten geteilten Programm als der funktionale Defekt erfasst wird, und Schätzen der Gleichzeitigkeitsverarbeitung, die sich zwischen dem ersten geteilten Programm und dem zweiten geteilten Programm unterscheidet, als Ursache eines Gleichzeitigkeitsdefekts, wenn der Defekt, der durch die gleichzeitige Verarbeitung verursacht wird, in dem zweiten geteilten Programm als der Gleichzeitigkeitsdefekt erfasst wird.

8. Bedienungsverifizierungsprogramm (620), das einen Computer veranlasst zum Ausführen:
eines Teilungsprozesses des Lesens jedes eines ersten Programms (61), das eine Vielzahl von Steuerungsverarbeitungen (63) aufweist, und eines zweiten Programms (62), das eine Vielzahl von Steuerungsverarbeitungen aufweist, wobei zumindest ein Teil der Vielzahl von Steuerungsverarbeitungen des ersten Programms verändert wurde, Unterteilens jeder der Vielzahl von Steuerungsverarbeitungen in eine Gleichzeitigkeitsverarbeitung (321), um eine Gleichzeitigkeitsverarbeitung in der Vielzahl von Steuerungsverarbeitungen zu implementieren, und eine funktionale sequentielle Verarbeitung (320), um eine Funktion zu implementieren, die durch die Vielzahl von Steuerungsverarbeitungen erreicht werden soll, Ausgebens des ersten Programms mit jeder der Vielzahl von darin enthaltenen Steuerungsverarbeitungen, die in die Gleichzeitigkeitsverarbeitung und die funktionale sequentielle Verarbeitung unterteilt sind, als ein erstes geteiltes Programm (71), und Ausgebens des zweiten Programms mit jeder der darin enthaltenen Steuerungsverarbeitungen, die in die Gleichzeitigkeitsverarbeitung und die funktionale sequentielle Verarbeitung unterteilt sind, als ein zweites geteiltes Programm (72); wobei die Vielzahl von Steuerungsverarbeitungen (63) Verarbeitungen sind, die Bedienungssätze, Verzweigungen, Zusammenführungen und Schleifen umfassen; und
eines Ursachenschätzungsprozesses des Schätzens der funktionalen sequentiellen Verarbeitung, die sich zwischen dem ersten geteilten Programm und dem zweiten geteilten Programm unterscheidet, als eine Ursache eines funktionalen Defekts, wenn der Defekt der Funktion in dem zweiten geteilten Programm als der funktionale Defekt erfasst wird, und Schätzens der Gleichzeitigkeitsverarbeitung, die sich zwischen dem ersten geteilten Programm und dem zweiten geteilten Programm unterscheidet, als Ursache eines Gleichzeitigkeitsdefekts, wenn der Defekt, der durch die gleichzeitige Verarbeitung verursacht wird, in dem zweiten geteilten Programm als der Gleichzeitigkeitsdefekt erfasst wird.

## Revendications

1. Appareil de vérification d'opération (100) comprenant :
une unité de division (110) destinée à lire un premier programme (61) comprenant une pluralité de traitements de commande (63), et un second programme (62) comprenant une pluralité de traitements de commande, où une partie au moins de la pluralité de traitements de commande du premier programme a été modifiée, afin de diviser chacun de la pluralité de traitements de commande en un traitement de simultanéité (321) afin de mettre en œuvre un traitement simultané dans la pluralité de traitements de commande, et en un traitement séquentiel fonctionnel (320) afin de mettre en œuvre une fonction à faire réaliser par la pluralité de traitements de commande, afin de délivrer en sortie le premier programme avec chacun de la pluralité de traitements de commande divisés en un traitement de simultanéité et en un traitement séquentiel fonctionnel en tant que premier programme divisé (71), et de délivrer en sortie le second programme avec chacun de la pluralité de traitements de commande divisés en un traitement de simultanéité et en un traitement séquentiel fonctionnel en tant que second programme divisé (72) ; dans lequel la pluralité de traitements de commande (63) sont des traitements comprenant des réglages, des branchements, des fusions, et des boucles d'opérations ; et
une unité d'estimation de cause (150) destinée à estimer le traitement séquentiel fonctionnel qui est différent entre le premier programme divisé et le second programme divisé en tant que cause d'un défaut fonctionnel lorsque le défaut de la fonction est détecté dans le second programme divisé en tant que défaut fonctionnel, et à estimer le traitement de simultanéité qui est différent entre le premier programme divisé et le second programme divisé en tant que cause d'un défaut de simultanéité lorsque le défaut qui est provoqué par le traitement simultané est détecté dans le second programme divisé en tant que défaut de simultanéité.

2. Appareil de vérification d'opération (100) selon la revendication 1, comprenant :
une unité contrôle d'équivalence (120) destinée à contrôler une équivalence entre le premier programme divisé (71) et le second programme divisé (72), et à délivrer en sortie une partie différente (212) qui est différente entre le premier programme divisé et le second programme divisé, et une partie équivalente (211) qui est équivalente entre le premier programme divisé et le second programme divisé, en tant que résultat de contrôle d'équivalence ; et
une unité détection de défaut (30) destinée à détecter le défaut fonctionnel ou le défaut de simultanéité dans le second programme divisé, sur la base du résultat de contrôle d'équivalence.

3. Appareil de vérification d'opération (100) selon la revendication 1 ou 2, comprenant :
une unité de stockage (160) destinée à stocker une table de correspondance de traitement simultané (163) avec chacune des instructions (32) afin de mettre en œuvre le traitement de simultanéité (321) associé au traitement de simultanéité, et
dans lequel l'unité de division (110) acquiert une liste des instructions à partir de la table de correspondance de traitement simultané qui est stockée par l'unité stockage, et divise, parmi la pluralité de traitements de commande (63), chaque traitement de commande comprenant l'une des instructions dans la liste des instructions en traitement de simultanéité comprenant l'instruction, et en traitement séquentiel fonctionnel (320) ne comprenant pas l'instruction.

4. Appareil de vérification d'opération (100) selon la revendication 3, dans lequel l'unité de stockage (160) stocke la table de correspondance de traitement simultané (163) avec l'instruction (32) associée au traitement de simultanéité (321), pour chaque environnement d'exécution de programme, et
Dans lequel l'unité de division (110) acquiert, à partir de la table de correspondance de traitement simultané, la liste des instructions qui sont chacune fournies par l'environnement d'exécution de chacun du premier programme (61) et du second programme (62).

5. Appareil de vérification d'opération (100) selon la revendication 1 ou 2, comprenant :
une unité stockage (160) destinée à stocker la table de correspondance de traitement simultané (163a) avec chacune des instructions (32) pour chaque paramètre du traitement de simultanéité (321) associé au traitement de simultanéité,
dans lequel l'unité division (110) acquiert, à partir de la table de correspondance de traitement simultané, une liste des instructions, et divise, parmi la pluralité de traitements de commande (63), chaque traitement de commande comprenant l'une des instructions dans la liste des instructions, en traitement de simultanéité comprenant l'instruction, et en traitement séquentiel fonctionnel (320) ne comprenant pas l'instruction.

6. Appareil de vérification d'opération (100) selon l'une quelconque des revendications 1 à 5,
dans lequel la modification ajoutée au second programme (62) est une modification consistant à traiter le contenu de l'un au moins de la pluralité de traitements de commande (63), une modification qui est provoquée par l'ajout d'un nouveau traitement de commande, ou une modification qui est provoquée par la suppression de l'un au moins de la pluralité de traitements de commande.

7. Procédé de vérification d'opération (610) comprenant les étapes suivantes :
lire, avec une unité division (110), chacun d'un premier programme (61) comprenant une pluralité de traitements de commande (63), et d'un second programme (62) comprenant une pluralité de traitements de commande, où une partie au moins de la pluralité de traitements de commande du premier programme a été modifiée, diviser chacun de la pluralité de traitements de commande en un traitement de simultanéité (321) afin de mettre en œuvre un traitement simultané dans la pluralité de traitements de commande, et en un traitement séquentiel fonctionnel (320) afin de mettre en œuvre une fonction à faire réaliser par la pluralité de traitements de commande, délivrer en sortie le premier programme avec chacun de la pluralité de traitements de commande divisés en un traitement de simultanéité et en un traitement séquentiel fonctionnel en tant que premier programme divisé (71), et délivrer en sortie le second programme avec chacun de la pluralité de traitements de commande divisés en un traitement de simultanéité et en un traitement séquentiel fonctionnel en tant que second programme divisé (72) ; dans lequel la pluralité de traitements de commande (63) sont des traitements comprenant des réglages, des branchements, des fusions, et des boucles d'opérations ; et
estimer, avec une unité estimation de cause (150) le traitement séquentiel fonctionnel qui est différent entre le premier programme divisé et le second programme divisé en tant que cause d'un défaut fonctionnel lorsque le défaut de la fonction est détecté dans le second programme divisé en tant que défaut fonctionnel, et estimer le traitement de simultanéité qui est différent entre le premier programme divisé et le second programme divisé en tant que cause d'un défaut de simultanéité lorsque le défaut qui est provoqué par le traitement simultané est détecté dans le second programme divisé en tant que défaut de simultanéité.

8. Programme de vérification d'opération (620) destiné à faire exécuter par un ordinateur :
un processus de division consistant à lire chacun d'un premier programme (61) comprenant une pluralité de traitements de commande (63), et d'un second programme (62) comprenant une pluralité de traitements de commande, où une partie au moins de la pluralité de traitements de commande du premier programme a été modifiée, diviser chacun de la pluralité de traitements de commande en un traitement de simultanéité (321) afin de mettre en œuvre un traitement simultané dans la pluralité de traitements de commande, et en un traitement séquentiel fonctionnel (320) afin de mettre en œuvre une fonction à faire réaliser par la pluralité de traitements de commande, délivrer en sortie le premier programme avec chacun de la pluralité de traitements de commande divisés en un traitement de simultanéité et en un traitement séquentiel fonctionnel en tant que premier programme divisé (71), et délivrer en sortie le second programme avec chacun de la pluralité de traitements de commande divisés en un traitement de simultanéité et en un traitement séquentiel fonctionnel en tant que second programme divisé (72) ; où la pluralité de traitements de commande (63) sont des traitements comprenant des réglages, des branchements, des fusions, et des boucles d'opérations ; et
un processus d'estimation de cause consistant à estimer le traitement séquentiel fonctionnel qui est différent entre le premier programme divisé et le second programme divisé en tant que cause d'un défaut fonctionnel lorsque le défaut de la fonction est détecté dans le second programme divisé en tant que défaut fonctionnel, et estimer le traitement de simultanéité qui est différent entre le premier programme divisé et le second programme divisé en tant que cause d'un défaut de simultanéité lorsque le défaut qui est provoqué par le traitement simultané est détecté dans le second programme divisé en tant que défaut de simultanéité.
